# EUROPEAN PATENT APPLICATION

(11) **EP 3 208 316 A1**
(43) Date of publication of application: **23.08.2017**
(21) Application number: 16156750.8
(22) Date of filing: 22.02.2016
(51) Int. Cl.: C09D 5/34, C08G 63/52, C09D 167/06, C08L 67/06

(54) **VEHICLE BODY FILLER COMPRISING AN UNSATURATED POLYESTER RESIN**

(71) Applicant: Immo de Moor N.V., 2500 Lier (BE)
(72) Inventor: de Moor, Marc, 2930 Brasschaat (BE)
(74) Representative: V.O.

(57) **Abstract**

The present invention relates to a curable filler composition suitable for smoothening a metal surface, in particular a metal surface of a vehicle body, wherein the filler composition comprises a resin composition and a curing composition reactive with the resin composition, which resin composition and curing composition are provided to be mixed upon application of the filler composition to the surface to be smoothened, wherein the resin composition comprises
- 5.0 to 35.0 wt. %, preferably 10.0-25.0 wt. % of a reactive component which becomes an integral part of the composition on curing,
- 50.0 to 80.0 wt. % of a polyester formed from a reaction of an a,β-unsaturated dibasic acid and/or anhydride, with one or more polyhydric alcohols,
and wherein the curing composition contains a mixture of a cumyl hydro peroxide catalyst and a dibenzoyl peroxide catalyst.

## Description

The present invention relates to a curable filler composition suitable for smoothening a metal surface, in particular a metal surface of a vehicle body, wherein the filler composition comprises a resin composition and a curing composition reactive with the resin composition, which resin composition and curing composition are provided to be mixed upon application of the filler composition to the surface to be smoothened, according to the preamble of the first claim.

Irregularities occurring in the surface of metal vehicle parts, such as train, metro, plane or automobile body parts are conventionally smoothened or repaired with either metallic solders or plastic materials, before being finished with a paint coat. For this type of repairing often use is made of thermosetting resin compositions, which is applied in a certain layer thickness to the surface that needs to be smoothened or repaired. The resin hardens or cure upon the action of a catalyst that is mixed into the composition. After curing of the resin, the thus coated surface is sanded to achieve the desired surface smoothness. Vehicle body fillers based on unsaturated polyester are cured primarily by way of addition polymerization with a peroxide catalyst and a reactive monomer or oligomer. In the oxidative reaction atmospheric oxygen reacts with the acid double bonds, as a result of which a high degree of cross-linking may be achieved and a fast dry to touch quality.

When preparing a formulation which should be ready for application to a surface to be smoothened, the usually paste-like catalyst is mixed into the resin composition. However, to achieve optimal mixing of the past-like catalyst composition into the much more liquid resin composition intensive mixing is required. This intensive mixing often leads to the inclusion of air into the mixture and the formation of bubbles in the resin film applied to the surface to be smoothened. These bubbles have been found to turn up in the cured resin film. The presence of these air inclusions or bubbles leads to an unevenly coated surface, which may even be aggravated after sanding and often results in parts of the surface being uncoated.

There is thus a need for a filler composition, with which a better mixing of the resin composition and the catalyst composition may be obtained, and a reduced risk to the occurrence of air inclusions.

It is therefore an object of this invention to provide a filler composition, with which a better mixing of the resin composition and the catalyst composition may be obtained, and a reduced risk to the occurrence of air inclusions.

This is achieved according to the present invention with a filler composition showing the technical features of the characterizing portion of the first claim.

Thereto the curable filler composition of this invention is characterized in that it comprises a resin composition and a curing composition reactive with the resin composition, which resin composition and curing composition are provided to be mixed upon application of the curable filler composition, wherein the resin composition comprises
- 5.0 to 35.0 wt. %, preferably 10.0-25.0 wt. % of a reactive component which becomes an integral part of the composition on curing,
- 50.0 to 80.0 weight percent of a polyester formed from a reaction of an a,B-unsaturated dibasic acid and/or anhydride, with one or more polyhydric alcohols,
and wherein the curing composition contains a mixture of a cumyl hydroperoxide catalyst and a dibenzoyl peroxide catalyst.

A skilled person would never combine in a curing composition a dibenzoyl peroxide catalyst and a cumyl hydroperoxide catalyst, for the reason that the dibenzoyl peroxide catalyst has a shorter curing time and the skilled person will assume that an immediate curing of the resin composition will occur upon the action of the dibenzoyl peroxide catalyst, thereby leaving the cumyl hydroperoxide unused.

The inventors have now found that the presence of the cumyl hydroperoxide catalyst prolongs the time that is available for applying the resin composition from a few minutes to 45 minutes or even more. The inventors have also observed that the resin composition undergoes a self-smoothening in the course of curing, as a result of which a subsequent soft sanding action to smoothen the coated surface suffices or the subsequent sanding action can be seriously reduced or can even be dispensed with. This is surprising and is attributed to crimping of the surface of the resin upon curing and evaporation of the solvent.

A preferred embodiment of this invention is characterized by the curable filler composition having a viscosity after mixing of the resin composition and the curing composition of 5.0 - 10.0 Stokes, preferably 6.0 - 9.0 Stokes, more preferably 6.5-8.5 Stokes. Such a curable filler composition has a viscosity which is sufficiently low to allow application or spraying using dedicated resin spraying devices in stead of an application knife, and at the same time shows a sufficient consistency to permit application of a layer with a thickness of up to a maximum of 5.0 mm, which provides the underlying metal surface with a good protection against corrosion and damaging. A curable filler composition with the claimed viscosity presents the advantage of providing a prolonged application time before curing in the application device sets on or risks to take place.

After having cured, the surface of the curable filler composition of this invention shows a remarkable smoothness, and a remarkable strong adhesion surface for primer composition based on epoxy resin or polyurethane. The curable filler composition of this invention is suitable to be used with a wide variety of natures of surfaces. The curable filler composition of this invention is for example suitable for use on metal surfaces such as is conventionally done in car body repair or car, airplane, train or metro a.o. body finishing, and shows a good adhesion to such surfaces, in particular to metal surfaces. The curable filler composition of this invention is also suitable for use on surfaces that had already been coated with a wide variety of primer compositions, for example those based on epoxy resin or polyurethane, either water or solvent based. While this invention is capable of improving the speed of any sanding carried out using pneumatic high speed sanding equipment, this equipment is not always available, and a surface treated with the curable filler composition of this invention can be shaped or abraded by hand with much softer materials using sanding sponges and pads.

A preferred embodiment of this invention is characterized in that the resin composition further contains at least 2.0 wt. % with respect to the weight of the resin composition of a metal phosphinate flame retardant. The inventors have observed that flame retardants support easy production runs, that the cured resin is resistant to bleed out by the flame retardant present in the composition, and is resistant to migration of its components to another resin. Furthermore, the presence of the flame retardant ensures slower flam spread, less smoke development and a reduction of the combustion products produced upon burning.

A further preferred embodiment of this invention is characterized in that the resin composition further contains a phosphorous-based flame retardant other than the metal phosphinate in an amount of at least 2.0 % by weight and 25.0 % by weight or less, in particular a phosphate ester.

The present invention also provides a method of smoothening a metal surface, and to a method of repairing a damaged galvanized metal surface, or the surface of any other material considered suitable by the skilled person for being treated with the curable filler composition of this invention. The method comprises the steps of applying to at least part of the surface of a vehicle body that needs smoothening or repairing, a curable filler composition as described above, and subjecting the surface having the curable filler composition resin applied thereto to conditions sufficient to cure the filler composition. The method preferably further comprises the step of finishing the metal surface. Finishing of the metal surface may be achieved using pneumatic high speed sanding equipment, or shaping or abrasion by hand with relatively soft materials using sanding sponges and pads.

The present invention further relates to a metal surface, in particular a metal surface of a vehicle body, which is coated with a filler composition comprising a resin composition that has been cured upon the action of a curing composition reactive with the resin composition, wherein the resin composition comprises
- 5.0 to 35.0 wt. %, preferably 10.0-25.0 wt. % of a reactive component which becomes an integral part of the composition on curing,
- 50.0 to 80.0 wt. % of a polyester formed from a reaction of an a,β-unsaturated dibasic acid and/or anhydride, with one or more polyhydric alcohols,
and wherein the curing composition contains a mixture of a cumyl hydroperoxide catalyst and a dibenzoyl peroxide catalyst.

While the use of the curable filler composition of this invention has been described above in combination with a metal surface, it should be clear that it is also suitable for use with surfaces made of a different material, for example a surface made of a plastic or mineral material.

### DETAILED DESCRIPTION OF THE INVENTION.

The curable filler composition of this invention comprises a first part - a resin composition, and a second part - a curing composition which is reactive with the resin composition and causes curing of the resin composition when contacted therewith.

### RESIN COMPOSITION.

### Polyester resin.

Within the scope of the present invention a wide variety of unsaturated polyester resins can be used in the resin composition. Suitable unsaturated polyester resins include, but are not limited to condensation polymers formed by the reaction of polyols (also known as polyhydric alcohols) comprising at least two alcohol or hydroxy functional groups, with unsaturated dibasic acids and/or anhydrides. Typical polyols used are glycols such as ethylene glycol, diethylene glycol, propylene glycol, neopentyl glycol, methyl propane diol, triethylene glycol, dipropylene glycol, 1,3-butanediol, 1,4-butanediol, 1,3 hexanediol, neopentyl glycol, methyl-pentanediol, 1,3-butylene glycol, 1,6-hexanediol, neopentyl glycol, ethylene oxide adduct of bisphenol, and propylene oxide adduct of bisphenol. Typcial unsaturated dibasic carboxylic acids include α,β-unsaturated polyesters, in particular phthalic acid, maleic acid, fumaric acid, isophthalic acid, nadic acid, adipic acid, and polyethylene terephthalate.

### Reactive monomer.

The resin composition of this invention also contains one or more reactive monomers or oligomeric compounds. With reactive monomers or oligomeric compounds is meant a reactive component which becomes an integral part, or a component that during curing of the polyester becomes crosslinked into the cured resin polymer. Suitable monomers for use with this invention include, but are not limited to, styrene, vinyl toluene, other methylated styrene monomers, methyl methacrylate, and other acrylate monomers. The reactive oligomers are generally polymers of two, three, or four monomer building blocks, or di-functional, trifunctional, or tetra-functional polymers derived from the monomers described above.

### Additives.

The resin composition of this invention will usually further comprise one or more additives/processing aids, such as promoters, rheology modifiers and dispersing agents, inhibitors and fillers.

Examples of fillers suitable for use in the resin composition of this invention include talc, carbonates for example calcium or magnesium carbonate or mixed calcium-magnesium carbonate, glass or ceramic microspheres, clay, talc, alumina hydrate, kaolin, silica sand, mica, and the like. The skilled person will be capable of selecting the most appropriate type and amount of filler material that is incorporated into the resin composition to achieve the envisaged viscosity and other rheological properties of the finished product, such as spreadability, leveling, sandability, sag resistance, and storage stability. Usually the amount of filler contained in the resin composition will vary between 25.0 and 80.0 wt. %, preferably between 35.0 and 60.0 wt. %

### CURING COMPOSITION.

The curing composition for the resin typically contains a catalyst, a carrier, plasticizer and one or more stabilizers. Typical catalysts include a broad range of peroxide catalysts. Suitable peroxide catalysts include, but are not limited to, cumyl hydro peroxides, di-benzoyl peroxides, ketone peroxides, peroxyesters, peroxyketals, and peroxydicarbonates, and any diluted forms of each. It is within the scope of this invention that the resin composition is caused to cure in the presence at least two peroxide catalysts, in particular a cumyl hydro peroxide catalyst and a dibenzoyl peroxide catalyst.

The weight ratio within which the cumyl hydro peroxide catalyst and a dibenzoyl peroxide catalyst are used, may vary within some ranges. Preferably however, the weight ratio within which cumyl hydro peroxide catalyst and a dibenzoyl peroxide catalyst are used varies from 1.0 to 10.0 wt. %, more preferably from 1.0 to 3.0 wt. %, often about 2.0 wt. %.

The weight ratio within which the resin composition and curing composition are mixed, may vary within some ranges. Preferably however, from 1.0 to 5.0 wt. %, more preferably from 1.0 to 3.0 wt. %, often about 2.0 wt. % of curing composition is mixed with the resin composition, with respect to the total weight of the curable body filler composition.

Those skilled in the art will recognize that certain peroxide initiators will require that a metallic salt such as cobalt octoate/napthenate be blended into the resin to effect cure. Various types and concentrations of quinone (and other) types of inhibitors may be used to obtain the required gel time with free radical peroxide initiators.

The ratio of the resin composition to the curing composition is generally in a range of about 100:1 to about 30:1, and is typically about 50:1. However, the peroxide concentration in the curing composition can be varied so that the volume of the curing agent and resin compositions are approximately the same. When this is done, the ratio of the volume of the resin side to the volume of the hardener side is generally about 10: 1 to about 1 :1, typically about 10: 1 to about 2:1. With the volume ratio in this range, it is much easier to provide the correct amount of hardener for the amount of resin used, eliminating the guesswork.

It shall be clear to those skilled in the art that the curable filler composition of this invention, in particular the resin composition and the curing composition, may be produced by mixing the ingredients described above in appropriate amounts as described above, wherein the curing composition contains both a cumyl hydro peroxide catalyst and a dibenzoyl peroxide catalyst. It shall be clear to those skilled in the art that the curable filler composition of this invention may also be produced by mixing a first curable filler composition containing a cumyl hydro peroxide catalyst, with an appropriate amount of a second curable filler composition containing a dibenzoyl peroxide catalyst.

## Claims

1. A curable filler composition suitable for smoothening a metal surface, in particular a metal surface of a vehicle body, wherein the filler composition comprises a resin composition and a curing composition reactive with the resin composition, which resin composition and curing composition are provided to be mixed upon application of the filler composition to the surface to be smoothened, wherein the resin composition comprises
- 5.0 to 35.0 wt. %, preferably 10.0-25.0 wt. % of a reactive component which becomes an integral part of the composition on curing,
- 50.0 to 80.0 wt. % of a polyester formed from a reaction of an a,β-unsaturated dibasic acid and/or anhydride, with one or more polyhydric alcohols,
and wherein the curing composition contains a mixture of a cumyl hydro peroxide catalyst and a dibenzoyl peroxide catalyst.

2. A curable filler composition according to claim 1, wherein the weight ratio of the cumyl hydro peroxide catalyst and the dibenzoyl peroxide catalyst ranges from 3.5 to 5.0, preferably from 1.0 to 3.0.

3. A curable filler composition according to claim 1 or 2, having a viscosity after mixing of the resin composition and the curing composition of 5.0 - 10.0 Stokes, preferably 6.0 - 9.0 Stokes, more preferably 6.5-8.5 Stokes.

4. A curable filler composition according to any one of the previous claims, wherein the a,β-unsaturated dibasic acid and/or anhydride is respectively maleic acid and maleic anhydride.

5. A curable filler composition according to any one of the previous claims, wherein the reactive component is styrene.

6. A curable filler composition according to any one of the previous claims, wherein the reactive component is an aliphatic ester, in particular ethyl acetate.

7. A curable filler composition according to any one of the previous claims, wherein the catalyst composition contains an accelerator for accelerating the cumyl hydro peroxide catalyst, wherein the accelerator is selected from the group of a polyamide salt, hydrochinon and a cobalt complex in 2-methyl-2,4-pentanediol.

8. A curable filler composition according to any one of the previous claims, wherein the catalyst composition contains an organic cobalt compound, in particular a cobalt - ester complex, more particularly cobalt bis-(2-hexayl ethanoate).

9. A curable filler composition according to any one of the previous claims, further including a tertiary amine promoter, preferably one or more amines selected from the group consisting of dimethylaniline, diethyl aniline, dimethyl-p-toluidine, p-tolyl diethanolamine, and m-tolyl diethanolamine.

10. A curable filler composition according to any one of the previous claims, wherein the resin composition further contains at least 2.0 wt. % with respect to the weight of the resin composition of a metal phosphinate flame retardant.

11. A curable filler composition according to any one of the previous claims, wherein the resin composition further contains a phosphorous-based flame retardant other than the metal phosphinate in an amount of between 2.0 wt. % and 25 wt. %, in particular a phosphate ester.

12. A method of smoothening a metal surface comprising the steps of applying to at least part of the surface of a surface that needs smoothening or repairing, a curable filler composition as described above, and subjecting the surface having the curable filler composition resin applied thereto to conditions sufficient to cure the filler composition.

13. A method according to claim 12, the method further comprising the step of finishing of the surface to be smoothened by abrasion, using pneumatic high speed sanding equipment or manual shaping or manual abrasion with sanding sponges and pads.

14. A metal surface, in particular a metal surface of a vehicle body, which is coated with a filler composition comprising a resin composition that has been cured upon the action of a curing composition reactive with the resin composition, wherein the resin composition comprises
- 5.0 to 35.0 wt. %, preferably 10.0-25.0 wt. % of a reactive component which becomes an integral part of the composition on curing,
- 50.0 to 80.0 wt. % of a polyester formed from a reaction of an a,β-unsaturated dibasic acid and/or anhydride, with one or more polyhydric alcohols,
and wherein the curing composition contains a mixture of a cumyl hydro peroxide catalyst and a dibenzoyl peroxide catalyst.
